# EUROPEAN PATENT SPECIFICATION

(11) **EP 1 598 217 B1**
(45) Date of publication and mention of the grant of the patent: **30.10.2013**
(21) Application number: 05010555.0
(22) Date of filing: 14.05.2005
(51) Int. Cl.: B60B 27/00

(54) **Bearing apparatus for a wheel of vehicle**
Lagervorrichtung für ein Fahrzeugrad
Dispositif de palier pour roue de véhicule

(30) Priority: 17.05.2004 JP 2004145794
(43) Date of publication of application: 23.11.2005
(73) Proprietor: NTN Corporation, Osaka (JP)
(72) Inventor: Norimatsu, Takayuki, Iwata-shi Shizuoka-ken (JP)
(74) Representative: Cohausz & Florack

(56) References cited:
- JP-A- 2000 087 980
- JP-A- 2000 289 403
- JP-A- 2000 310 228
- JP-A- 2002 061 660
- US-B1- 6 217 220

## Description

### BACKGROUND OF THE INVENTION

### Field of the Invention

The present invention relates to a bearing apparatus for a wheel of vehicle for supporting a driven wheel of vehicle such as an automobile rotatably relative to its suspension apparatus, and more particularly to improve the strength and durability of a hub wheel and an inner ring press-fitted on the hub wheel used in the bearing apparatus for a wheel of vehicle.

### Description of Background Art

The bearing apparatus for a wheel of vehicle has been advanced not only in reducing its manufacturing cost but in reducing its weight and size in order to improve the fuel consumption. In these bearing apparatus, a hub wheel and a double row rolling bearing are formed as a unit and there is known a representative example of a so-called third generation type which each of inner and outer members is formed with a flange, one of inner raceway surfaces of the double row rolling is formed directly on the hub wheel, and the other inner raceway surface is formed on a separate inner ring to be press-fitted on the hub wheel.

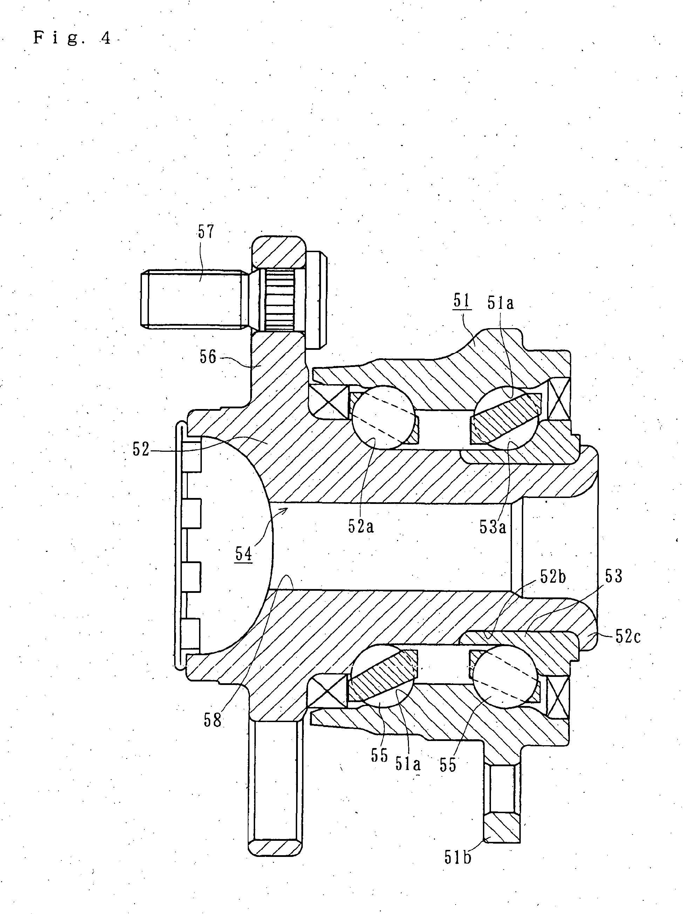

Fig. 4 illustrates a bearing apparatus for a wheel of vehicle for rotatably supporting the wheel relative to the suspension apparatus of the third generation type of the prior art comprising an outer member 51, an inner member 54 including a hub wheel 52 and an inner ring 53 to be press-fitted on the hub wheel 52, and double row rolling elements 55 and 55 contained between the outer and inner members 51 and 54. The hub wheel 52 is integrally formed at its one end with a wheel mounting flange 56 for mounting thereon a wheel (not shown) of vehicle and has an inner raceway surface 52 on its outer circumferential surface and a cylindrical portion 52b axially extending from the inner raceway surface 52a. Hub bolts 57 for securing the wheel are arranged via an equidistant space along the circumference of the wheel mounting flange 56. The inner ring 53 formed on its outer surface with an inner raceway surface 53a is press-fitted on the cylindrical portion 52b of the hub wheel 52. The inner ring 53 is secured on the hub wheel 52 by a caulked portion 52c formed by plastically deforming the end of the axially extending cylindrical portion 52b radially outward to prevent the inner ring 53 from being slipped off from the hub wheel 52.

The outer member 51 is integrally formed with a body mounting flange 51b and has double row outer raceway surfaces 51a and 51a on its inner circumferential surface. Double row rolling elements 55 and 55 are contained freely rollably between the double row outer raceway surfaces 51a and 51a and inner raceway surfaces 52a and 53a opposed thereto.

The hub wheel 52 is made by forging carbon steel including carbon of 0.40~0.80% by weight and surface hardened by high frequency induction quenching in a region from the base of the wheel mounting flange 56 to the cylindrical portion 52b through the inner raceway surface 52a. However the caulked portion 52c is remained in its rare condition as having its surface hardness after forging. On the other hand, the inner ring 53 is made of high carbon chrome bearing steel such as SUJ 2 and is hardened to its core by quenching.

Accordingly it is possible to realize a bearing apparatus for a wheel of vehicle of low cost and having a sufficient durability and to prevent generation of damages such as clacks at the caulked portion 52c. The through bore 58 formed in the center of the hub wheel 52 also realizes reduction of weight of the hub wheel 52 and reduction of manufacturing cost by commonly using the hub wheel 52 after forging between structures of the bearing apparatus used for supporting a driving wheel and for supporting a driven wheel.
[Reference Patent Publication] Japanese Laid-open Patent Publication No. 2002-61660

In the bearing apparatus for a wheel of vehicle of the prior art described above, since the hub wheel 52 is formed with the through bore 58 at the center of the hub wheel 52 it is possible to reduce the weight of the hub wheel 52 and the provision of the through bore 58 enables common use of the hub wheel 52 after forging between the bearing apparatus for supporting a driving wheel and for supporting a driven wheel. On the contrary, the provision of the through bore 58 in the hub wheel 52 also causes several problems such as reduction of rigidity of the hub wheel 52 especially at a region of inboard side of the hub wheel 52 to which a large momentum load is applied and thus reduction of the strength and durability of the hub wheel 52.

If the rigidity of the cylindrical portion 52b is small, the cylindrical portion 52b near the caulked portion 52c would be deformed radially outward during the caulking process. Accordingly the inner ring 53 would be also deformed radially outward and thus hoop stress is generated within the inner ring 53 which reduces the durability of the inner ring 53.

In addition such kind of bearing apparatus is usually used in a severe external environments above a road surface and thus is frequently suffering from muddy water. Especially in a sea coast region, the bearing apparatus is exposed to salt water and in a cold district it is exposed to muddy water including salt of antifreezing agent. Especially since the inner ring 53 is exposed to them as its naked steel surface, it would become rusty. If the generation of rust progresses in the inner ring 53 sustained a large hoop stress, diffusive hydrogen present in the environments would enter into the metallographic structure of the inner ring 53 and bring a so-called "delayed fracture" causing the hydrogen embrittlement which causes destruction of the metallic grain boundancy.

Document US 6,217,220 B1 is regarded as the closest prior art and discloses the preamble of claim 1.

### SUMMARY OF THE INVENTION

It is, therefore, an object of the present invention to provide a bearing apparatus for a wheel of vehicle which can reduce the weight and size of the hub wheel with keeping its high rigidity, and can suppress generation of the hoop stress of the inner ring caused by the caulking process to obtain a desirable durability.

For achieving the object of the present invention, there is provided, according to the present invention of claim 1, a bearing apparatus for a wheel of vehicle comprising; an outer member formed with double row outer raceway surfaces on the inner peripheral surface thereof; an inner member including a hub wheel having a wheel mounting flange integrally formed therewith at one end of the inner member and a cylindrical portion axially extending from the wheel mounting flange and further including at least one inner ring formed with at least one of double row inner raceway surfaces opposed to the double row outer raceway surfaces and adapted to be press-fitted onto the cylindrical portion of the hub wheel; and double row rolling elements contained freely rollably between the outer and inner raceway surfaces respectively of the outer and inner members, the inner ring being secured axially immovably relative to the hub wheel by a caulked portion by plastically deforming the end of the axially extending cylindrical portion radially outward characterized in that: a partition wall is formed in the axially extending cylindrical portion of the hub wheel at a portion subjected to a load applied to at least the inner raceway surface of inboard side of the double row inner raceway surfaces and a hollow portion is formed within the cylindrical portion at a portion outboard side from the partition wall.

According to the invention of claim 1, in a so-called self-retaining structure in which the inner ring is secured on the hub wheel by plastically deforming the end of the cylindrical portion of the hub wheel, since the partition wall is formed in the axially extending cylindrical portion of the hub wheel at a portion subjected to a load applied to at least the inner raceway surface of inboard side of the double row inner raceway surfaces and the hollow portion is formed within the cylindrical portion at a portion outboard side from the partition wall, it is possible to commonly use as a forged part used a bearing apparatus for supporting a driving wheel only by punching out the partition wall and thus to reduce the manufacturing cost of the bearing apparatus.

In addition, the provision of the hollow portion enables to reduce the weight of the hub wheel and to improve the heat radiation effect and thus the durability thereof. Furthermore, the provision of the partition wall on the cylindrical portion of the hub wheel at the a position to which the inner ring is press-fitted enables to increase the rigidity of the hub wheel and thus to improve the strength and durability of the hub wheel although a large momentum load is applied to the bearing portion.

Furthermore, since the deformation of the cylindrical portion near the caulked portion is suppressed by the provision of the partition wall, the hoop stress generated in the inner ring can be also suppressed minimum. Thus it is possible to prevent generation of "delayed fracture" although the bearing is used under a severe rusty environments.

Preferably, according to the invention of claim 2, the inner diameter of the hollow portion is set at a diameter of a prepared hole for a serration to be formed herein. This enables the hub wheel as a forged part to be commonly used for the bearing apparatus for supporting a driving wheel only by punching out the partition wall.

According to the invention of claim 3, the hoop stress of the inner ring is limited less than 300 MPa. This enables to keep the strength and durability of the inner ring sufficient.

According to the invention of claim 4, a preservation film is formed on the surface of the inner ring. This enables to prevent generation of rust in the naked portion of the inner ring exposed to the ambient.

Preferably, as defined in claim 5, the preservation film is a plated layer formed of zinc/nickel alloy. Since the zinc/nickel alloy is superior in corrosion resistance, it is possible to exhibit a strong rust resistive effect under a severe environments. Also high resistance against abrasion is attained by high surface hardness of the zinc/nickel alloy.

According to the invention of claim 6, sealing devices are arranged at both ends of an annular space formed between the outer and inner members. Such a structure enables to reduce an amount of grease contained within the bearing apparatus and thus the weight and size of the bearing apparatus as compared with a conventional bearing apparatus in which openings of the outer member are wholly closed by sealing caps. In addition, since such a sealing device can be commonly used as a sealing device in the bearing apparatus for supporting a driving wheel, cost reduction can be further enhanced by standardization of the bearing apparatus between that for supporting a driving wheel and that for a driven wheel.

### Effects of the Invention

Since the bearing apparatus for a wheel of vehicle of the present invention comprises an outer member formed with double row outer raceway surfaces on the inner peripheral surface thereof; an inner member including a hub wheel having a wheel mounting flange integrally formed therewith at one end of the inner member and a cylindrical portion axially extending from the wheel mounting flange and further including at least one inner ring formed with at least one of double row inner raceway surfaces opposed to the double row outer raceway surfaces and adapted to be press-fitted onto the cylindrical portion of the hub wheel; and double row rolling elements contained freely rollably between the outer and inner raceway surfaces respectively of the outer and inner members, the inner ring being secured axially immovably relative to the hub wheel by a caulked portion by plastically deforming the end of the axially extending cylindrical portion radially outward characterized in that: a partition wall is formed in the axially extending cylindrical portion of the hub wheel at a portion subjected to a load applied to at least the inner raceway surface of inboard side of the double row inner raceway surfaces and a hollow portion is formed within the cylindrical portion at a portion outboard side from the partition wall, it is possible to commonly use as a forged part used a bearing apparatus for supporting a driving wheel only by punching out the partition wall and thus to reduce the manufacturing cost of the bearing apparatus.

In addition, the provision of the hollow portion enables to reduce the weight of the hub wheel and to improve the heat radiation effect and thus the durability. Furthermore, the provision of the partition wall on the cylindrical portion of the hub wheel at the a position to which the inner ring is press-fitted enables to increase the rigidity of the hub wheel and thus to improve the strength and durability of the hub wheel although a large momentum load is applied to the bearing portion.

Furthermore, since the deformation of the cylindrical portion near the caulked portion is suppressed by the provision of the partition wall, the hoop stress generated in the inner ring can be also suppressed minimum. Thus it is possible to prevent generation of "delayed fracture" which would be caused by penetration of diffusive hydrogen present in the environment into the metallographic structure of the inner ring although the bearing is used under a severe rusty environments.

### Best mode for carrying out the Invention

Best mode for carrying out the present invention is a bearing apparatus for a wheel of vehicle comprising; an outer member formed with double row outer raceway surfaces on the inner peripheral surface thereof; an inner member including a hub wheel having a wheel mounting flange integrally formed therewith at one end of the inner member and a cylindrical portion axially extending from the wheel mounting flange and further including at least one inner ring formed with at least one of double row inner raceway surfaces opposed to the double row outer raceway surfaces and adapted to be press-fitted onto the cylindrical portion of the hub wheel; and double row rolling elements contained freely rollably between the outer and inner raceway surfaces respectively of the outer and inner members, the inner ring being secured axially immovably relative to the hub wheel by a caulked portion by plastically deforming the end of the axially extending cylindrical portion radially outward characterized in that: a partition wall is formed in the axially extending cylindrical portion of the hub wheel at a portion subjected to a load applied to at least the inner raceway surface of inboard side of the double row inner raceway surfaces and a hollow portion is formed within the cylindrical portion at a portion outboard side from the partition wall.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal section view showing a first embodiment of the bearing apparatus for a wheel of vehicle of the present invention;
Fig. 2 is a longitudinal section view showing a hub wheel after being forged;
Fig. 3 is a partially enlarged section view showing a seal device of outboard side in Fig. 1; and
Fig. 4 is a longitudinal section view of a bearing apparatus for a wheel of vehicle of the prior art.

### DESCRIPTION OF THE PREFERRED EMBODIMENTS

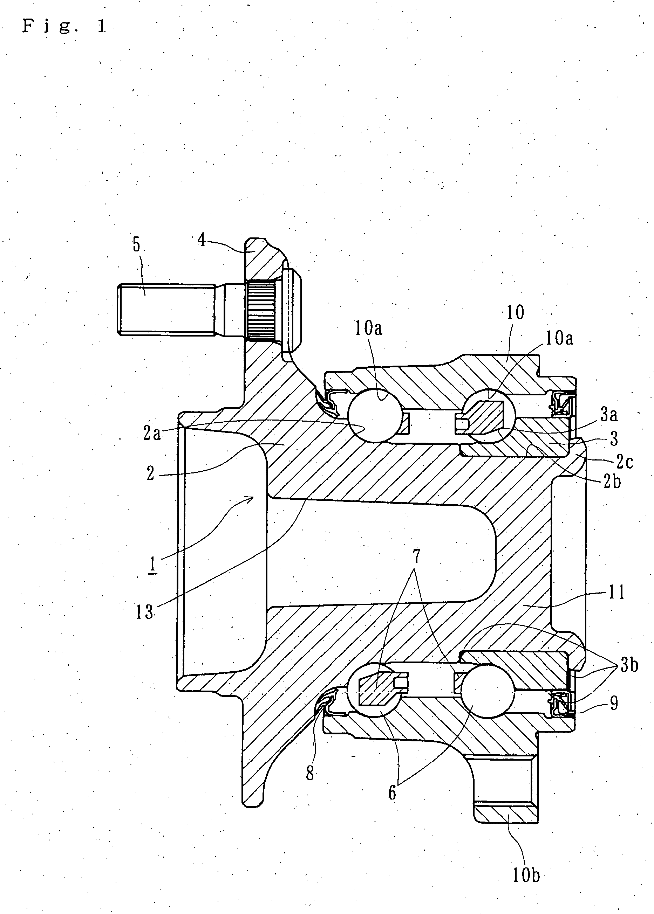

Fig. 1 shows a first embodiment of a bearing apparatus for a wheel of vehicle of the present invention. In the description below, a term "outboard side" of the apparatus denotes a side which is positioned outside of the vehicle body and a term "inboard side" of the apparatus denotes a side which is positioned inside of the body when the bearing apparatus is mounted on the vehicle body.

The bearing apparatus for a wheel of vehicle comprises an inner member 1, an outer member 10, and a plurality of rolling elements (balls) 6 and 6 rollably contained between the outer and inner members 1 and 10. The inner member 1 includes a hub wheel 2 and an inner ring 3 press-fitted on the hub wheel 2. The hub wheel 2 is integrally formed at its outboard side end with a wheel mounting flange 4 for mounting thereon a wheel (not shown) of vehicle. Hub bolts 5 for securing the wheel are arranged via an equidistant space along the circumference of the wheel mounting flange 4. The hub wheel 2 has an inner raceway surface 2a on its outer circumferential surface and a cylindrical portion 2b axially extending from the inner raceway surface 2a. The inner ring 3 formed on its outer surface with an inner raceway surface 3a is press-fitted on the cylindrical portion 2b of the hub wheel 2. The inner ring 3 is secured on the hub wheel 2 by a caulked portion 2c formed by plastically deforming the end of the axially extending cylindrical portion 2b radially outward to prevent the inner ring 3 from being slipped off from the hub wheel 2. According to this embodiment, the adoption of a so-called self-retaining structure enables to control the preload of the bearing without using any fastening means such as a nut and thus to make easy the assembly of the bearing to a vehicle and to maintain the preload for a long term.

The outer member 10 is integrally formed with a body mounting flange 10b and has double row outer raceway surfaces 10a and 10a on its inner circumferential surface. Double row rolling elements 6 and 6 are contained between the double row outer raceway surfaces 10a, 10a and inner raceway surfaces 2a, 3a opposed thereto. The double row rolling elements 6 and 6 are freely rollably supported by cages 7 and 7. Sealing devices 8 and 9 are arranged at either ends of the outer member 10 for preventing leakage of grease contained within the bearing apparatus and immigration of rain water or dusts from the outside into the bearing apparatus.

Although it is shown in drawings a bearing apparatus of so-called third generation type in which the inner raceway surface 2a is formed directly on the outer circumferential surface of the hub wheel, it will be appreciated that the present invention is not limited to such a third generation type and is applicable to the first and second generation types in which a pair of inner rings are press-fitted on the axially extending cylindrical portion of the hub wheel. Also although it is shown a double row angular ball bearing having balls 6 and 6 as rolling elements, it may be replaced for example by a double row conical rolling bearing having conical rollers as rolling elements.

The hub wheel 2 is made of medium carbon steel such as S53C including carbon of 0.40~0.80%by weight. The outboard side inner raceway surface 2a, seal land portion to which the outboard side sealing device 8 contacts, and the axially extending cylindrical portion 2b of the hub wheel 2 are surface hardened by high frequency induction quenching as having its surface hardness of 58∼64 HRC. The caulked portion 2c is remained in its non-quenched portion as having its surface hardness less than 25 HRC after forging. On the other hand, the inner ring 3 is made of high carbon chrome bearing steel such as SUJ 2 and is hardened to its core by quenching as having a hardness of 58~64 HRC.

On the other hand the outer member 10 is made of medium carbon steel including carbon of 0.40~0.80% by weight such as S53C. The double row outer raceway surfaces 10a and 10a as well as inner circumferential surface at ends into which sealing devices 8 and 9 are fitted are hardened by high frequency induction quenching as having a surface hardness of 58∼64 HRC.

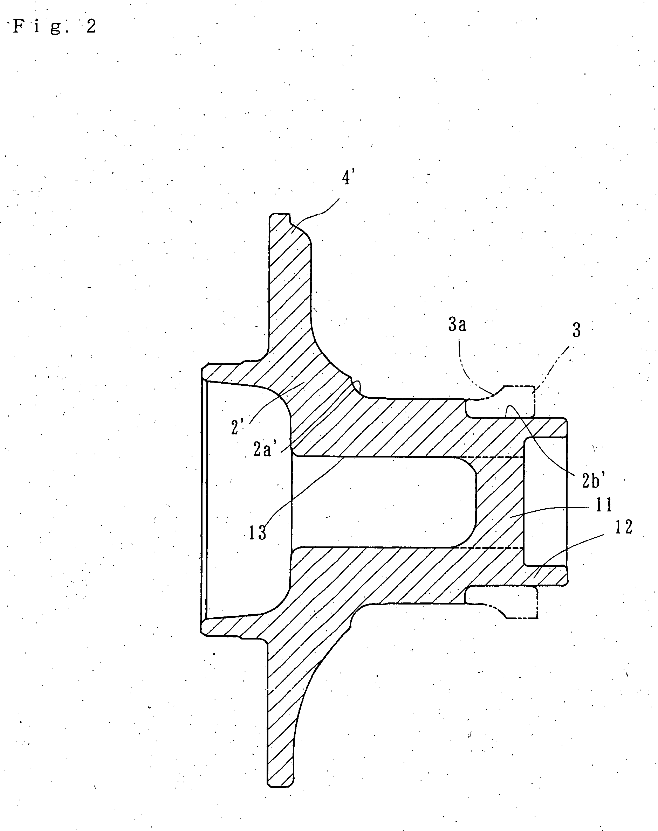

Fig. 2 is a longitudinal section view showing a hub wheel 2' after being forged. The hub wheel 2' is integrally formed at its one end with a wheel mounting flange 4', an outboard side inner raceway surface 2a' on its outer circumferential surface and a cylindrical portion 2b' axially extending from the inner raceway surface 2a'. The hub wheel 2' is further integrally formed with a partition wall in the axially extending cylindrical portion 2b' of the hub wheel 2' at a portion subjected to a load applied to at least the inner ring 3. A hollow portion 13 is formed within the cylindrical portion 2b' at the outboard side of the partition wall 11 and a cylindrically projected portion 12 for forming the caulked portion 2c is extended from the cylindrical portion 2b' toward the inboard side. It is preferable to provide a draft of 5~10° in the hollow portion 13 for forging.

The inner diameter of the hollow portion 13 is set at a diameter of a prepared hole for a serration to be formed herein for commonly use this hub wheel 2' to a bearing apparatus for supporting a driving wheel. This enables the hub wheel 2' as a forged part to be commonly used for the bearing apparatus for supporting a driving wheel only by punching out the partition wall 11. When this hub wheel 2' is used in a bearing apparatus for a driving wheel, the partition wall 11 is punched out and thus a through bore is formed at the center of the hub wheel 2'. However the strength and durability of the hub wheel 2' can be sufficiently kept since the momentum load applied to the cylindrical portion 2b' can be also supported by a stem portion of an outer joint member forming a constant velocity universal joint which is inserted into the hollow portion 13.

As previously described with reference to Fig. 1, the provision of the hollow portion 13 at the center of the hub wheel 2 enables to reduce the weight of the hub wheel 2 and to improve the heat radiation effect and thus the durability thereof. Furthermore, the provision of the partition wall 11 on the cylindrical portion 2b of the hub wheel 2 at the a position to which the inner ring 3 is press-fitted enables to increase the rigidity of the hub wheel 2 and thus to improve the strength and durability of the hub wheel 2 although a large momentum load is applied to the bearing portion.

Furthermore, since the deformation of the cylindrical portion 2b near the caulked portion 2c is suppressed by the provision of the partition wall 11, the hoop stress generated in the inner ring 3 can be also suppressed minimum. The proportion of the inner ring 3, the thickness of the caulked portion 2c, and the caulking load etc. are appropriately set so that the hoop stress generated within the inner ring 3 is limited less than 300 MPa. Thus it is possible to prevent generation of "delayed fracture" which would be caused by penetration of diffusive hydrogen present in the environment into the metallographic structure of the inner ring although the bearing is used under a severe rusty environments.

In order to prevent generation of rust by salt present in an environment on a naked part of the inner ring 3, it is preferable to form, on the surface of the inner ring 3, a plated layer of zinc/nickel alloy after width grinding of the inner ring 3. A preservation film 3b of zinc/nickel alloy superior in corrosion resistance can be formed on the outer circumferential surface and the width surface of the inner ring 3 by grinding the inner raceway surface 3a and the inner circumferential surface of the inner ring 3. It is preferable that the zinc/nickel alloy is a colored chromate including 5~10% nickel. Since the zinc/nickel alloy has higher surface hardness and abrasion resistance than the zinc plate etc, it is appreciated to have the film thickness more than 6~10µ m. However it is usually limited less than 5µm due to a reason in accuracy.

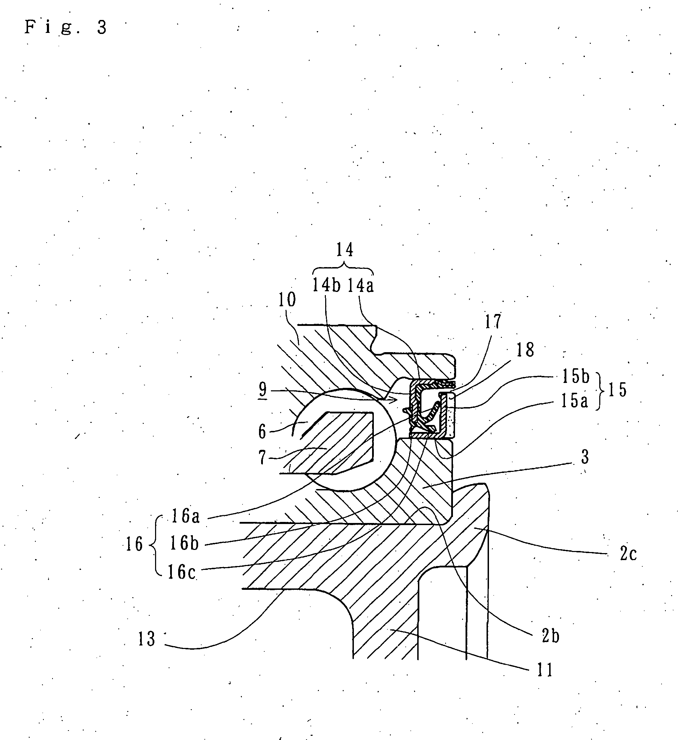

As shown in Fig. 3, the inboard side sealing device 9 comprises a first sealing plate 14 and a second sealing plate 15 fitted respectively on the outer member 10 and the inner ring 3, each sealing plate 14 and 15 having a substantially "L" cross section and oppositely arranged each other. The second sealing plate 15 comprises a cylindrical portion 15a fitted on the inner ring 3, and an upstanding portion 15b extending radially outward from the cylindrical portion 15a. The second sealing plate 15 is made of ferrite-stainless steel sheet (JIS SUS 430 etc.) or cold rolled steel sheet (JIS SPCC etc.) and press-formed as having a configuration of "L" cross section and wholly annular.

On the other hand, the first sealing plate 14 comprises a cylindrical portion 14a fitted on the outer member 10 and an upstanding portion 14b extending radially inward from the cylindrical portion 14a. A sealing member 16 comprising a side lip 16a, a grease lip 16b and an intermediate lip 16c and made of elastomer such as rubber is bonded to the first sealing plate via vulcanization.

The side lip 16a slidably contacts the upstanding portion 15b of the sealing plate 15, and the grease lip 16b and the intermediate 16c contact the cylindrical portion 15a of the second sealing plate 15. A labyrinth seal 17 is formed by a small radial gap formed between the cylindrical portion 14a of the first sealing plate 14 and the upstanding portion 15b of the second sealing plate 15. A magnetic encoder 18 formed by elastomer such as rubber mingled with magnetic powder such as ferrite is bonded to the inboard side surface of the upstanding portion 15b via vulcanization. The magnetic encoder 18 is an annular disc in which N and S poles are alternately magnetized at a predetermined pitch along the circumferential direction thereof and forms a magnetic rotary encoder for detecting the rotation speed of a wheel.

According to the present invention, such a sealing device 9 is arranged so as to close an opening formed between the outer member 10 and the inner ring 3. Such a structure enables to reduce an amount of grease contained within the bearing apparatus and thus the weight and size of the bearing apparatus as compared with a conventional bearing apparatus in which openings of the outer member are wholly closed by sealing caps. In addition, since such a sealing device can be commonly used as a sealing device in the bearing apparatus for supporting a driving wheel, cost reduction can be further enhanced by standardization of the bearing apparatus between that for supporting a driving wheel and that for a driven wheel.

The bearing apparatus for a wheel of vehicle can be applied to any one of the first through third generations of a so-called self-retain structure in which the inner ring is press-fitted onto the cylindrical portion of the hub wheel and the inner ring is secured on the hub wheel by plastically deforming the end of the cylindrical portion of the hub wheel.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims.

## Claims

1. A bearing apparatus for a wheel of vehicle comprising;
an outer member (10) formed with double row outer raceway surfaces (10a) on the inner peripheral surface thereof; an inner member (1) including a hub wheel (2) having a wheel mounting flange (4) integrally formed therewith at one end of the inner member (1) and a cylindrical portion (2b) axially extending from the wheel mounting flange (4) and further including at least one inner ring (3) formed with at least one of-double row inner raceway surfaces (2a and/or 3a) opposed to the double row outer raceway surfaces (10a) and adapted to be press-fitted onto the cylindrical portion (2b) of the hub wheel (2); and double row rolling elements (6) contained freely rollably between the outer and inner raceway surfaces respectively of the outer and inner members (10 and 1), the inner ring (3) being secured axially immovably relative to the hub wheel (2) by a caulked portion (2c) by plastically deforming the end of the axially extending cylindrical portion (2b) radially outward, whereby
the hub wheel (2) has an inner raceway surface (2a) being formed directly on the outer circumferential surface of the hub wheel (2) and a partition wall (11) is formed in the axially extending cylindrical portion (2b) of the hub wheel (2) at a position to which the inner ring (3) is press-fitted at a portion subjected to a load applied to at least the inner raceway surface (3a) of inboard side of the double row inner raceway surfaces (2a and 3a) and a hollow portion (13) is formed within the cylindrical portion (2b) at a portion outboard side from the partition wall (11), **characterized in that** the bearing apparatus can be used for supporting a driving wheel only by punching out the partition wall (11), to form a through bore at the center of the hub wheel (2).

2. A bearing apparatus for a wheel of vehicle of claim 1
wherein the inner diameter of the hollow portion (13) is set at a diameter of a prepared hole for a serration to be formed herein.

3. A bearing apparatus for a wheel of vehicle of claim 1 or 2 wherein the hoop stress of the inner ring (3) is limited less than 300 MPa.

4. A bearing apparatus for a wheel of vehicle of any one of claims 1 through 3 wherein a preservation film is formed on the surface of the inner ring (3).

5. A bearing apparatus for a wheel of-vehicle of claim 4
wherein the preservation film is a plated layer formed of zinc/nickel alloy.

6. A bearing apparatus for a wheel of vehicle of any one of claims 1 through 5 wherein sealing devices (8 and 9) are arranged at both ends of an annular space formed between the outer and inner members (10 and 1).

## Patentansprüche

1. Lagervorrichtung für ein Fahrzeugrad, umfassend:
ein äußeres Glied (10), das mit doppelreihigen äußeren Laufringflächen (10a) auf der Innenumfangsfläche davon ausgebildet ist;
ein inneres Glied (1), das eine Radnabe (2) enthält, die einen Radanbringungsflansch (4), welcher einstückig damit an einem Ende des inneren Glieds (1) ausgebildet ist, und einen zylindrischen Abschnitt (2b) aufweist, welcher axial vom Radanbringungsflansch (4) her verläuft, und ferner zumindest einen Innenring (3) enthält, der mit zumindest einer der zweireihigen inneren Laufringflächen (2a und/oder 3a) gegenüber den doppelreihigen äußeren Laufringflächen (10a) ausgebildet ist und dazu geeignet ist, auf den zylindrischen Abschnitt (2b) der Radnabe (2) aufgepresst zu sein; und
zweireihige Rollelemente (6), die frei rollbar zwischen den äußeren bzw. inneren Laufringflächen des äußeren und inneren Glieds (10 und 1) enthalten sind, wobei der Innenring (3) axial unbeweglich bezüglich der Radnabe (2) durch einen verstemmten Abschnitt (2c) durch plastisches Verformen des Endes des axial verlaufenden zylindrischen Abschnitts (2b) radial nach außen befestigt ist, wobei
die Radnabe (2) eine innere Laufringfläche (2a) aufweist, die direkt auf der Außenumfangsfläche der Radnabe (2) ausgebildet ist, und eine Trennwand (11) im axial verlaufenden zylindrischen Abschnitt (2b) der Radnabe (2) an einer Position ausgebildet ist, an der der Innenring (3) an einem Abschnitt aufgepresst ist, der einer Last unterworfen ist, welche auf zumindest die innere Laufringfläche (3a) der nach innen gerichteten Seite der doppelreihigen inneren Laufringflächen (2a und 3a) ausgeübt ist, und ein hohler Abschnitt (13) innerhalb des zylindrischen Abschnitts (2b) auf einer nach außen gerichteten Abschnittsseite von der Trennwand (11) ausgebildet ist, **dadurch gekennzeichnet, dass** die Lagervorrichtung zum Lagern eines Antriebsrads lediglich durch Ausstanzen der Trennwand (11) zum Ausbilden einer Durchgangsbohrung in der Mitte der Radnabe (2) benutzt werden kann.

2. Lagervorrichtung für ein Fahrzeugrad nach Anspruch 1, wobei der Innendurchmesser des hohlen Abschnitts (13) auf einen Durchmesser eines vorbereiteten Lochs für eine Verzahnung eingestellt ist, die darin ausgebildet werden soll.

3. Lagervorrichtung für ein Fahrzeugrad nach einem der Ansprüche 1 oder 2, wobei die Umfangsspannung des Innenrings (3) auf weniger als 300 MPa begrenzt ist.

4. Lagervorrichtung für ein Fahrzeugrad nach einem der Ansprüche 1 bis 3, wobei eine Konservierungsschicht auf der Oberfläche des Innenrings (3) ausgebildet ist.

5. Lagervorrichtung für ein Fahrzeugrad nach Anspruch 4, wobei die Konservierungsschicht eine plattierte Lage ist, die aus Zink/Nickel-Legierung ausgebildet ist.

6. Lagervorrichtung für ein Fahrzeugrad nach einem der Ansprüche 1 bis 5, wobei Dichtungsvorrichtungen (8 und 9) an beiden Enden eines ringförmigen Raums angeordnet sind, der zwischen dem äußeren und inneren Glied (10 und 1) ausgebildet ist.

## Revendications

1. Dispositif de palier pour une roue d'un véhicule comprenant: un élément extérieur (10) formé avec des surfaces de chemin de roulement extérieures à double rangée (10a) sur la surface périphérique intérieure de celui-ci ; un élément intérieur (1) incluant un moyeu de roue (2) ayant un flasque de montage de roue (4) formé en un seul tenant avec celui-ci à une extrémité de l'élément intérieur (1) et une portion cylindrique (2b) s'étendant axialement à partir du flasque de montage de roue (4) et incluant en outre au moins une bague intérieure (3) formée avec au moins une des surfaces de chemin de roulement intérieures à double rangée (2a et/ou 3a) opposées aux surfaces de chemin de roulement extérieures à double rangée (10a) et adaptée afin d'être ajustée par pressage sur la portion cylindrique (2b) du moyeu de roue (2) ; et des éléments de roulement à double rangée (6) contenus de manière à rouler librement entre les surfaces de chemin de roulement extérieure et intérieure respectivement des éléments extérieur et intérieur (10 et 1), la bague intérieur (3) étant fixée axialement de manière inamovible par rapport au moyeu de roue (2) par une portion calfeutrée (2c) en déformant plastiquement l'extrémité de la portion cylindrique (2b) s'étendant axialement radialement vers l'extérieur, moyennant quoi le moyeu de roue (2) possède une surface de chemin de roulement intérieure (2a) étant formée directement sur la surface circonférentielle extérieure du moyeu de roue (2) et une paroi de partition (11) est formée dans la portion cylindrique s'étendant axialement (2b) du moyeu de roue (2) à une position à laquelle la bague intérieure (3) est ajustée par pressage au niveau d'une portion soumise à une charge appliquée à au moins la surface de chemin de roulement intérieure (3a) du côté intérieur des surfaces de chemin de roulement intérieures à double rangée (2a et 3a) et une portion creuse (13) est formée à l'intérieur de la portion cylindrique (2b) au niveau d'une portion du côté extérieur à partir de la paroi de partition (11), **caractérisé en ce que** le dispositif de palier peut être utilisé pour soutenir une roue motrice seulement en pinçant la paroi de partition (11) afin de former un alésage traversant au centre du moyen de roue (2).

2. Dispositif de palier pour une roue d'un véhicule selon la revendication 1, dans lequel le diamètre intérieur de la portion creuse (13) est réglé à un diamètre d'un trou préparé afin qu'une dentelure soit formée dans celui-ci.

3. Dispositif de palier pour une roue d'un véhicule selon les revendications 1 ou 2, dans lequel la contrainte circonférentielle de la bague intérieure (3) est limitée à moins de 300 Mpa.

4. Dispositif de palier pour une roue d'un véhicule selon une quelconque des revendications 1 à 3, dans lequel un film de préservation est formé sur la surface de la bague intérieure (3).

5. Dispositif de palier pour une roue d'un véhicule selon la revendication 4, dans lequel le film de préservation est une couche de placage formée d'un alliage zinc/nickel.

6. Dispositif de palier pour une roue d'un véhicule selon une quelconque des revendications 1 à 5, dans lequel des dispositifs d'étanchéité (8 et 9) sont agencés aux deux extrémités d'un espace annulaire formé entre les éléments extérieur et intérieur (10 et 1).
